# EUROPEAN PATENT SPECIFICATION

(11) **EP 3 205 538 B1**
(45) Date of publication and mention of the grant of the patent: **17.03.2021**
(21) Application number: 15848732.2
(22) Date of filing: 07.09.2015
(51) Int. Cl.: B60T 7/12, B60T 8/17

(54) **METHOD AND DEVICE FOR CONTROLLING MOTORCYCLE BRAKE FOR ASSISTING MOTORCYCLE DEPARTURE**
VERFAHREN UND VORRICHTUNG ZUR STEUERUNG EINER MOTORRADBREMSE ZUR UNTERSTÜTZUNG DER ABFAHRT EINES MOTORRADS
PROCÉDÉ ET DISPOSITIF DE COMMANDE DE FREINAGE DE MOTOCYCLETTE POUR AIDER AU DÉPART DE LA MOTOCYCLETTE

(30) Priority: 09.10.2014 JP 2014207853
(43) Date of publication of application: 16.08.2017
(73) Proprietor: Robert Bosch GmbH, 70442 Stuttgart (DE)
(72) Inventor: NEMOTO Nobuho, Yokohama-shi Kanagawa 224-8501 (JP)
(86) International application number: PCT/JP2015/075348
(87) International publication number: WO 2016/056337

(56) References cited:
- JP-A- H0 920 230
- JP-A- H09 175 352
- JP-A- 2007 112 209
- JP-A- 2010 053 764
- JP-A- 2013 154 674
- US-A1- 2010 030 445

## Description

### Technical Field

The invention relates to a method and a device for controlling a motorcycle brake to assist with departure of a motorcycle and, in detail, to a method and a device for controlling a motorcycle brake, capable of reliably actuating a departure assistant system to assist with departure of a motorcycle, particularly, a motorcycle not only on a sloping road but also on a horizontal road (a flat road) even in the case where an expensive component, such as a gradient detection sensor, is not provided and an inexpensive component configuration is adopted.

### Background Art

Document JP H09 175352 A describes a slope start assisting device which enhances safety by issuing an alarm when the braking force becomes insufficient.

Document JP H09 20230 A describes a brake control unit but also fails to mention that the vehicle can be a motorcycle.

Document US 2010/030445 A1 describes a brake force maintain control device which depends on a rapidly-pressed state of a vehicle and a cylinder pressure which is larger than a predetermined value.

In a motorcycle a conventional brake control device with a slope departure assistant system that is added with a function of assisting with slope departure adopts a configuration of using a gradient detection sensor, actuating the slope departure assistant system during a stop on an uphill road, and automatically retaining a brake pressure, and, as means for cancelling actuation of the slope departure assistant system, also adopts a configuration that when determining all types of engine information (conditions) as indicated by (i) to (iv) below are satisfied in addition to gradient information of a road surface by the gradient detection sensor, determining that a driver has an intention of departure, and automatically canceling a brake.

### <Engine information (conditions) for cancelling the actuation of the slope departure assistant system>

(i) An accelerator opening is at least equal to a specified value.
(ii) A gear position is not in neutral.
(iii) Output torque is at least equal to a specified value.
(iv) A clutch is engaged.

Meanwhile, due to the configuration of the device, relatively expensive components, such as the gradient detection sensor as well as various sensors (devices) that obtain the engine information including the accelerator opening, the gear position, an output torque value, a clutch state, and the like, are required for such a brake control device. As a result, cost of the device is increased, and motorcycles, on which such a brake control device can be mounted, are limited.

PTL 1 discloses a vehicle departure state estimation device that can estimate a slope departure state of the vehicle on the basis of an operation state amount of the vehicle without a relatively expensive G sensor (the gradient detection sensor) being provided, and the operation state amount of the vehicle at least includes a vehicle speed, an engine speed, an engine load, and a depression amount of an accelerator pedal.

In the motorcycle, at least one of a foot brake and a hand brake has to be actuated even on a horizontal road (a flat road) , for example, when the motorcycle stops at a stop signal, a tollbooth, or the like. When the driver wishes to release both hands from a handlebar to defog or wipe off dirt on a helmet or pay fee at the tollbooth, for example, during this stop, the driver usually has to maintain such a posture that a left foot supports a motorcycle body while a right foot keeps depressing a brake pedal. For this reason, the motorcycle is desirably equipped with a configuration capable of actuating a departure aid system to automatically retain the brake force even when the driver releases his/her foot from the brake pedal at departure on the horizontal road.

However, the vehicle departure state estimation device disclosed in PTL 1 merely adopts a configuration of actuating the departure aid system only at the slope departure, and thus a configuration of actuating the departure aid system at the departure on the horizontal road, for example, is not disclosed. In addition, depending on the vehicle, such a case is assumed where only some of the engine information, such as above <Engine information (conditions) for cancelling the actuation of the slope departure assistant system> or engine information described in PTL 1, can be used for a reason of further cost cut of the device, and the like. Thus, the brake control device for the motorcycle has to be improved to have such a configuration that the departure aid system can be actuated even when only some of the engine information can be used.

### Citation List

### Patent Literature

[PTL 1] JP-A-2012-153176

### Summary of Invention

### Technical Problem

The invention particularly has a purpose of providing a method and a device for controlling a motorcycle brake, the method and the device capable of reliably actuating a departure assistant system to assist with departure of a motorcycle, which in the context of this description is a motorcycle, not only on a sloping road but also on a horizontal road even in the case where an expensive component, such as a gradient detection sensor, is not provided and an inexpensive component configuration is adopted.

### Solution to Problem

In order to achieve the above purpose, a summary of a configuration of the invention is as follows.
(1) A method for controlling a motorcycle brake to assist with departure of a motorcycle including:
   (a) detecting a stop of the motorcycle;
   (b) detecting brake pressures of all wheels and determining whether the brake pressure applied to at least one of all the wheels through a brake operation by a driver is at least equal to an actuation pressure;
   (c) activating a departure aid system regardless of whether a road surface on which the motorcycle is stopped has a gradient when it is determined that the brake pressure is at least equal to the actuation pressure;
   (d) determining whether the brake pressure that is applied to a rear wheel through the brake operation by the driver is at least equal to a specified pressure that is required to stop the motorcycle; and
   (e) actuating the departure aid system to automatically retain the brake pressure in a state as is when the brake pressure of the rear wheel is at least equal to the specified pressure, and actuating the departure aid system, boosting the brake pressure to become at least equal to the specified pressure, and thereafter automatically retaining the brake pressure when the brake pressure of the rear wheel is lower than the specified pressure.
(2) The method for controlling the motorcycle brake according to above (1) in which the specified pressure has a constant value or a variable value that varies in accordance with a road surface gradient or a road surface condition that is estimated during the stop of the motorcycle.
(3) The method for controlling the motorcycle brake according to above (1) or (2) further including:
   (f) determining whether at least one type of motorcycle information that includes an accelerator opening, an engine speed, and output torque information of the motorcycle in an actuated state of the departure aid system is at least equal to a specified value;
   (g) determining whether a specified time has elapsed in a state where the motorcycle information is at least equal to the specified value; and
   (h) stopping actuation of the departure aid system to automatically cancel the brake pressure of the rear wheel only when the specified time has elapsed in the state where the motorcycle information is at least equal to the specified value.
(4) The method for controlling the motorcycle brake according to above (3) in which the brake pressure of the rear wheel is automatically cancelled in (h) while a pressure reduction amount is adjusted in accordance with a numerical value of the motorcycle information.
(5) The method for controlling the motorcycle brake according to above (3) in which the brake pressure of the rear wheel is automatically cancelled in (h) while a pressure reduction amount is adjusted in accordance with a numerical value of the accelerator opening.
(6) The method for controlling the motorcycle brake according to above (3), (4), or (5) in which the specified value of the motorcycle information is a constant value or a variable value that corresponds to at least one of the road surface gradient or the road surface condition that is estimated during the stop of the motorcycle.
(7) The method for controlling the motorcycle brake according to above (6) in which the specified value of the motorcycle information is set to a large value when the gradient that is estimated during the stop of the motorcycle is an uphill, or is set to a small value when the gradient that is estimated during the stop of the motorcycle is a downhill.
(8) The method for controlling the motorcycle brake according to any one of above (1) to (7) in which the departure aid system is not provided with a gradient detection sensor and is actuated through the brake operation by the driver.
(9) A device for controlling a motorcycle brake to assist with departure of a motorcycle characterized by including:
   (a) means for detecting a stop of the motorcycle;
   (b) means for detecting brake pressures of all wheels and determining whether the brake pressure applied to at least one of all the wheels through a brake operation by a driver is at least equal to an actuation pressure;
   (c) means for activating a departure aid system regardless of whether a road surface on which the motorcycle is stopped has a gradient when it is determined that the brake pressure is at least equal to the actuation pressure;
   (d) means for determining whether the brake pressure that is applied to a rear wheel through the brake operation by the driver is at least equal to a specified pressure that is required to stop the motorcycle; and
   (e) means for actuating the departure aid system to automatically retain the brake pressure in a state as is when the brake pressure of the rear wheel is at least equal to the specified pressure, and actuating the departure aid system, boosting the brake pressure to become at least equal to the specified pressure, and thereafter automatically retaining the brake pressure when the brake pressure of the rear wheel is lower than the specified pressure.
(10) The device for controlling the motorcycle brake according to above (9) in which the specified pressure has a constant value or a variable value that varies in accordance with a road surface gradient or a road surface condition that is estimated during the stop of the motorcycle.
(11) The device for controlling the motorcycle brake according to above (9) or (10) further including:
   (f) means for determining whether at least one type of motorcycle information that includes an accelerator opening, an engine speed, and output torque information of the motorcycle in an actuated state of the departure aid system is at least equal to a specified value;
   (g) means for determining whether a specified time has elapsed in a state where the motorcycle information is at least equal to the specified value; and
   (h) means for stopping actuation of the departure aid system to automatically cancel the brake pressure of the rear wheel only when the specified time has elapsed in the state where the motorcycle information is at least equal to the specified value.
(12) The device for controlling the motorcycle brake according to above (11) in which the brake pressure of the rear wheel is automatically cancelled by the means (h) while a pressure reduction amount is adjusted in accordance with a numerical value of the motorcycle information.
(13) The device for controlling the motorcycle brake according to above (11) in which the brake pressure of the rear wheel is automatically cancelled by the means (h) while a pressure reduction amount is adjusted in accordance with a numerical value of the accelerator opening.
(14) The device for controlling the motorcycle brake according to claim 11, 12, or 13 in which the specified value of the motorcycle information is a constant value or a variable value that corresponds to at least one of the road surface gradient or the road surface condition that is estimated during the stop of the motorcycle.
(15) The device for controlling the motorcycle brake according to above (14) in which the specified value of the motorcycle information is set to a large value when the gradient that is estimated during the stop of the motorcycle is an uphill, or is set to a small value when the gradient that is estimated during the stop of the motorcycle is a downhill.

### Advantageous Effects of Invention

According to the invention, the method and the device for controlling the motorcycle brake can be provided, the method and the device capable of reliably actuating the departure assistant system to assist with departure of the motorcycle, particularly, a motorcycle not only on a sloping road but also on a horizontal road even in the case where an expensive component, such as a gradient detection sensor, is not provided and an inexpensive component configuration is adopted.

### Brief Description of Drawings

[Fig. 1] Fig. 1 is a representative view of a brake hydraulic circuit that is used in a brake control device for a motorcycle according to the invention.
[Fig. 2] Fig. 2 is a block diagram that conceptually depicts an example of a configuration of the brake control device that controls the brake hydraulic circuit depicted in Fig. 1.
[Fig. 3] Fig. 3 is a representative example of a flowchart at a time when the brake control device executes control from a stop of a motorcycle to automatic retention of a rear-wheel brake pressure by using the brake hydraulic circuit depicted in Fig. 1.
[Fig. 4] Fig. 4 is a representative example of a flowchart at a time when the brake control device executes control from the automatic retention of the rear-wheel brake pressure to automatic cancellation thereof by using the brake hydraulic circuit depicted in Fig. 1.

### Description of Embodiments

A description will hereinafter be made on an embodiment of the invention with reference to the drawings.

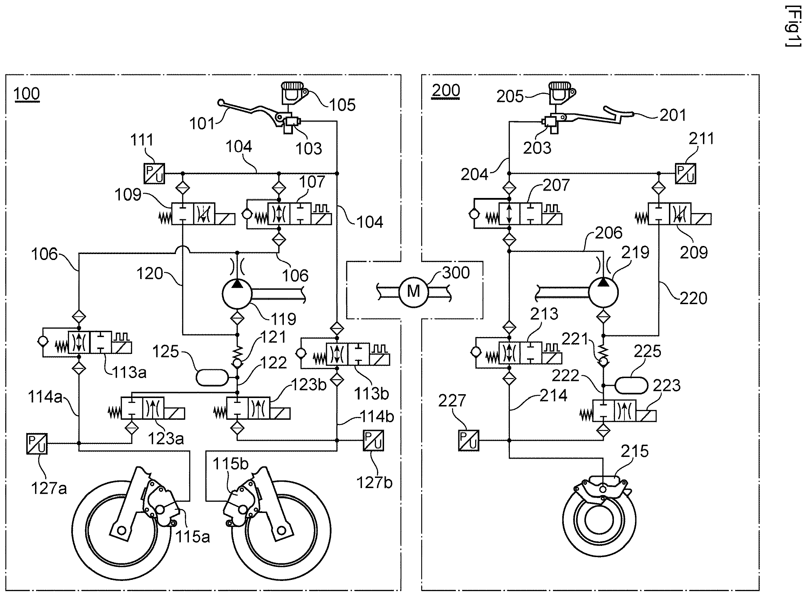

Fig. 1 depicts an example of a brake hydraulic circuit that constitutes a brake control device for a motorcycle as a motorcycle according to the invention. This hydraulic circuit is primarily configured by including a front-wheel hydraulic circuit 100, a rear-wheel hydraulic circuit 200, and a DC motor 300 that respectively drives hydraulic pumps 119, 219 of the front-wheel hydraulic circuit 100 and the rear-wheel hydraulic circuit 200.

First, a configuration of the front-wheel hydraulic circuit 100 will be described. The front-wheel hydraulic circuit 100 includes: a brake lever 101 that is operated by a right hand of a driver; a front-wheel side master cylinder 103 that is pressurized when the brake lever 101 is operated; a front-wheel side master cylinder reservoir 105 that is connected to the front-wheel side master cylinder 103; a front-wheel side switching valve 107 that is connected to the front-wheel side master cylinder 103 via a pipeline 104; and a front-wheel side high pressure intake valve 109 that is connected to the front-wheel side master cylinder 103 via the pipeline 104. Note that a filter is provided in each of a connection section between the pipeline 104 and the front-wheel side switching valve 107 and a connection section between the pipeline 104 and the front-wheel side high pressure intake valve 109. Furthermore, a pressure sensor 111 is provided in the pipeline 104. The pressure sensor 111 detects a pressure between the front-wheel side master cylinder 103 and each of the front-wheel side switching valve 107 and the front-wheel side high pressure intake valve 109 and transmits the pressures to an electronic control unit ECU 400, which will be described below.

In addition, a front-wheel side first inlet valve 113a is connected to the front-wheel side switching valve 107 via a pipeline 106. A filter is also provided in a connection section between the pipeline 106 and each of the front-wheel side switching valve 107 and the front-wheel side first inlet valve 113a. The front-wheel side first inlet valve 113a is connected to a front-wheel side first caliper 115a via a pipeline 114a.

Meanwhile, a front-wheel side second inlet valve 113b is directly connected to the pipeline 104. A filter is also provided in a connection section between the front-wheel side second inlet valve 113b and the pipeline 104. The front-wheel side second inlet valve 113b is connected to a front-wheel side second caliper 115b via a pipeline 114b.

Accordingly, the front-wheel side second inlet valve 113b is connected to a front-wheel brake that is actuated by the front-wheel hydraulic circuit 100 in Fig. 1. The front-wheel brake is constructed of : a first front-wheel brake that includes the front-wheel side first caliper 115a; and a second front-wheel brake that includes the front-wheel side second caliper 115b. As described above, the front-wheel side first caliper 115a is connected to the front-wheel side first inlet valve 113a via the pipeline 114a. In addition, as described above, the front-wheel side second caliper 115b is connected to the front-wheel side second inlet valve 113b via the pipeline 114b.

Meanwhile, a discharge side of the front-wheel side hydraulic pump 119 is connected to the pipeline 106 via a throttle. A suction side of the front-wheel side hydraulic pump 119 is connected to a pipeline 120 via a filter. The front-wheel side hydraulic pump 119 is driven by the DC motor 300. In addition, one end of a front-wheel side first check valve 121 is connected to the pipeline 120. Furthermore, a discharge port of the front-wheel side high pressure intake valve 109 is connected to the pipeline 120. The other end of the front-wheel side first check valve 121 is connected to a pipeline 122. The front-wheel side first check valve 121 is disposed in a manner to prevent a reverse flow from the pipeline 120 to the pipeline 122.

An inflow end of a front-wheel side first outlet valve 123a is connected to the front-wheel side first caliper 115a via the pipeline 114a. An outflow port of the front-wheel side first outlet valve 123a is connected to the pipeline 122. A filter is provided in a connection section between an inflow port of the front-wheel side first outlet valve 123a and the pipeline 114a. A pressure sensor 127a is provided in the pipeline 114a. The pressure sensor 127a measures a pressure in the pipeline 114a and transmits a pressure signal to the ECU 400.

Furthermore, an inflow port of a front-wheel side second outlet valve 123b is connected to the front-wheel side second caliper 115b via the pipeline 114b. An outflow port of the front-wheel side second outlet valve 123b is connected to the pipeline 122. A filter is provided in a connection section between the inflow port of the front-wheel side second outlet valve 123b and the pipeline 114b. A pressure sensor 127b is provided in the pipeline 114b. The pressure sensor 127b measures a pressure in the pipeline 114b and transmits a pressure signal to the ECU 400. Note that the pressure sensor 127b does not always have to be provided in the invention.

Next, a configuration of the rear-wheel hydraulic circuit 200 will be described by using Fig. 1. The rear-wheel hydraulic circuit 200 includes: a brake pedal 201 that is operated by a right foot of the driver; a rear-wheel side master cylinder 203 that is pressurized when the brake pedal 201 is operated; a rear-wheel side master cylinder reservoir 205 that is connected to the rear-wheel side master cylinder 203; a rear-wheel side switching valve 207 that is connected to the rear-wheel side master cylinder 203 via a pipeline 204; and a rear-wheel side high pressure intake valve 209 that is connected to the rear-wheel side master cylinder 203 via the pipeline 204. Note that a filter is provided in each of a connection section between the pipeline 204 and the rear-wheel side switching valve 207 and a connection section between the pipeline 204 and the rear-wheel side high pressure intake valve 209. Furthermore, a pressure sensor 211 is provided in the pipeline 204. The pressure sensor 211 detects a pressure between the rear-wheel side master cylinder 203 and each of the rear-wheel side switching valve 207 and the rear-wheel side high pressure intake valve 209 and transmits the pressures to the ECU 400.

In addition, a rear-wheel side inlet valve 213 is connected to the rear-wheel side switching valve 207 via a pipeline 206. A filter is also provided in a connection section between the pipeline 206 and each of the rear-wheel side switching valve 207 and the rear-wheel side inlet valve 213. The rear-wheel side inlet valve 213 is connected to a rear-wheel side caliper 215 via a pipeline 214. A rear-wheel brake is constructed of the rear-wheel side caliper 215. As described above, the rear-wheel side caliper 215 is connected to the rear-wheel side inlet valve 213 via the pipeline 214.

Meanwhile, a discharge side of the rear-wheel side hydraulic pump 219 is connected to the pipeline 206 via a throttle. A suction side of the rear-wheel side hydraulic pump 219 is connected to a pipeline 220 via a filter. The rear-wheel side hydraulic pump 219 is driven by the DC motor 300. In addition, one end of a rear-wheel side check valve 221 is connected to the pipeline 220. Furthermore, a discharge port of the rear-wheel side high pressure intake valve 209 is connected to the pipeline 220. Moreover, the other end of the rear-wheel side check valve 221 is connected to a pipeline 222. The rear-wheel side check valve 221 is disposed in a manner to prevent a reverse flow from the pipeline 220 to the pipeline 222.

A discharge port of a rear-wheel side outlet valve 223 is connected to the pipeline 222. Furthermore, a rear-wheel side reservoir (accumulator) 225 is connected to a portion of the pipeline 222 between the rear-wheel side check valve 221 and the rear-wheel side outlet valve 223.

The rear-wheel side caliper 215 is connected to an inflow port of the rear-wheel side outlet valve 223 via the pipeline 214. An outflow port of the rear-wheel side outlet valve 223 is connected to the pipeline 222. A filter is provided in a connection section between an inflow port of the rear-wheel side outlet valve 223 and the pipeline 214. A pressure sensor 227 is provided in the pipeline 214. The pressure sensor 227 measures a pressure in the pipeline 214 and transmits a pressure signal to the ECU 400.

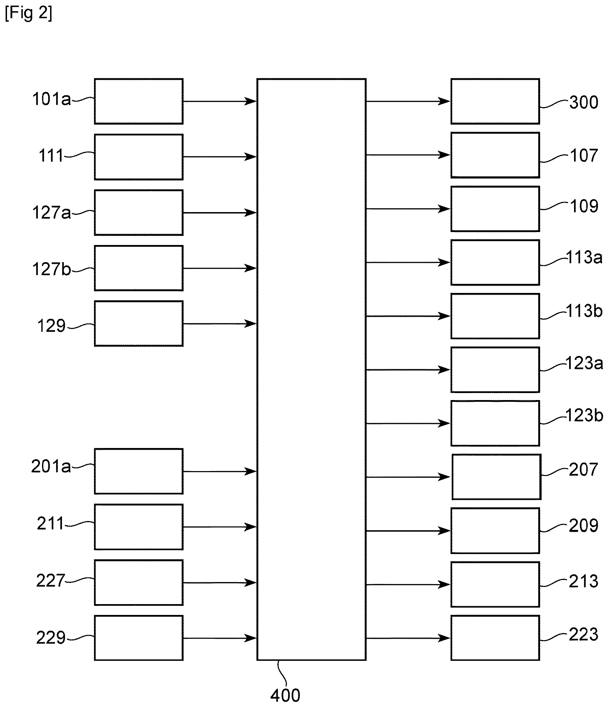

The hydraulic circuit that is depicted in Fig. 1 is controlled by the electronic control unit (ECU) 400 that is depicted in a block diagram of Fig. 2. A brake lever switch 101a that is provided on the brake lever 101, the pressure sensors 111, 127a, 127b, and a front-wheel speed sensor 129 that detects a front-wheel rotational speed are connected to the ECU 400. The brake lever switch 101a transmits an operation signal of the brake lever 101 to the ECU 400. The pressure sensors 111, 127a respectively transmit the signals indicative of the pressures in the pipelines 104, 114a to the ECU 400. The front-wheel speed sensor 129 transmits a front-wheel rotational speed signal to the ECU 400.

Furthermore, a brake pedal switch 201a that is provided on the brake pedal 201, the pressure sensors 211, 227, and a rear-wheel speed sensor 229 that detects a rear-wheel rotational speed are connected to the ECU 400. The brake pedal switch 201 transmits an operation signal of the brake pedal 201 to the ECU 400. The pressure sensors 211, 227 respectively transmit the signals indicative of the pressures in the pipelines 204, 214 to the ECU 400. The rear-wheel speed sensor 229 transmits a rear-wheel rotational speed signal to the ECU 400. In addition, if necessary, various sensors such as a radar sensor, an acceleration sensor, and a gradient sensor can also be connected to the ECU 400. However, the main purpose of the invention is to reliably actuate the departure assistant system even when the expensive component such as the gradient detection sensor is not provided and the inexpensive component configuration is adopted. Thus, it is desired to minimize an opportunity of providing the various sensors.

Based on the operation signal, the pressure signals, and the speed signal, the ECU 400 actuates each of the DC motor 300, the front-wheel side switching valve 107, the front-wheel side high pressure intake valve 109, the front-wheel side first inlet valve 113a, the front-wheel side second inlet valve 113b, the front-wheel side first outlet valve 123a, and the front-wheel side second outlet valve 123b in accordance with a specified condition. Furthermore, based on the operation signal, the pressure signals, and the speed signal, the ECU 400 actuates each of the rear-wheel side switching valve 207, the rear-wheel side high pressure intake valve 209, the rear-wheel side inlet valve 213, and the rear-wheel side outlet valve 223 in accordance with a specified condition. Note that each of the valves is an electromagnetic valve including a solenoid and opened/closed states thereof are switched when the valve is energized by the ECU 400.

Furthermore, in the brake control device of the invention, when the ECU 400 receives the rotational speed signals from the front-wheel speed sensor 129 and the rear-wheel speed sensor 229 and detects locking of the wheels during braking, the ECU 400 actuates an anti-brake lock system (ABS) , actuates each of the hydraulic pumps, opens/closes each of the valves to control braking forces, and thus can prevent locking of the wheels.

In the brake control device that includes the brake hydraulic circuit depicted in Fig. 1, the brake forces of the front wheel and the rear wheel are changed through the operations of the hydraulic pumps and the various valves without interposing the operation by the driver. In this way, distribution of the brake forces can be changed. WO 2008/050744 may be referred for specific operations of the hydraulic pumps, the electromagnetic valves, and the like at a time when the distribution of the brake forces is changed.

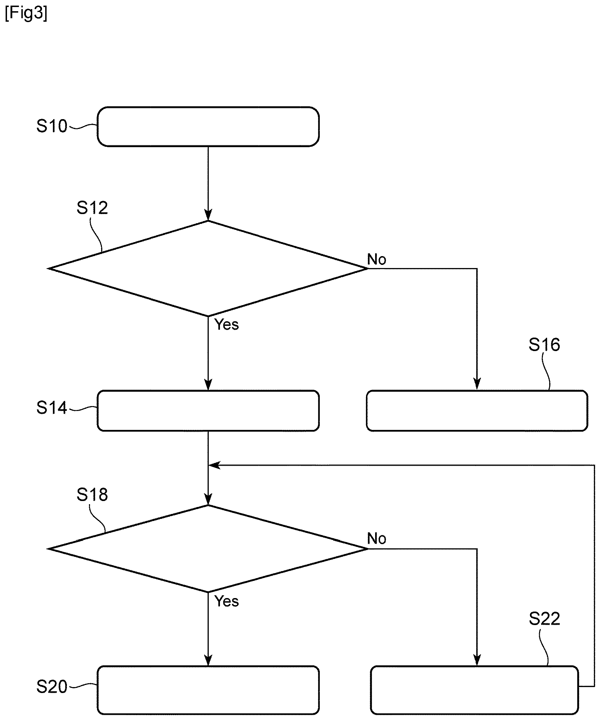

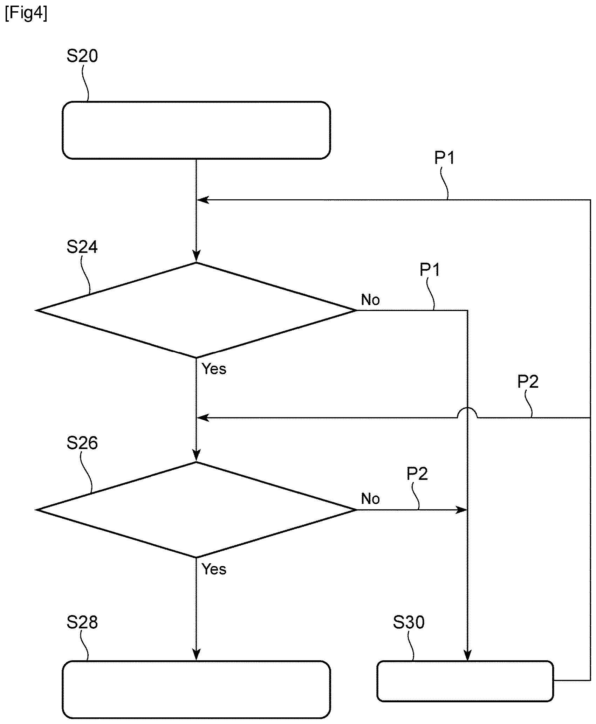

The brake control device of the invention includes a departure aid system, which will be described below. A description will hereinafter be made on control by the departure aid system according to one embodiment of the invention with reference to flowcharts depicted in Fig. 3 and Fig. 4.

Fig. 3 is a representative example of a flowchart at a time when the brake control device executes control from a stop of the motorcycle to automatic retention of a rear-wheel brake pressure by using the brake hydraulic circuit depicted in Fig. 1.

First, it is determined (detected) in step S10 whether the motorcycle is stopped. A determination on whether the motorcycle is stopped can be made by using any conventional technique. For example, whether the motorcycle is stopped can be determined by using each of the wheel speed sensors 129, 229, or the like.

If it is determined in step S10 that the motorcycle is stopped, the brake pressures of all of the wheels are next detected in step S12. Of all of the wheels (the two wheels of the front wheel and the rear wheel in the case of the motorcycle depicted in Fig. 1), it is determined whether the brake pressure that is applied to at least one of the wheels through a brake operation by the driver is at least equal to an actuation pressure. Note that the "actuation pressure" described herein means a brake pressure at a time when the departure aid system is activated in the next step, in other words, at a time when a switch of the departure aid system is turned on, and also means a brake pressure generated by braking in such a degree that the driver's intention of activating the departure aid system is acknowledged therefrom.

As a method for detecting the brake pressure of the wheel, for example, the pressure sensor 111, which is provided in the pipeline 104, and the pressure sensor 211, which is provided in the pipeline 204, respectively measure hydraulic pressures of the master cylinders 103, 203 and can detect the measured hydraulic pressures of the master cylinders 103, 203 as the brake pressures. In this case, it is determined whether the brake pressure generated through braking by the driver is at least equal to the actuation pressure from measured values of the hydraulic pressures of the master cylinders 103, 203.

As another method for detecting the brake pressure of the wheel, for example, the pressure sensor 127a, which is provided in the pipeline 114a, the pressure sensor 127b, which is provided in the pipeline 114b, and the pressure sensor 227, which is provided in the pipeline 214, respectively measure hydraulic pressures of wheel cylinders and can detect the measured hydraulic pressures of the wheel cylinders as the brake pressures. In this case, it is determined whether the brake pressure generated through braking by the driver is at least equal to the actuation pressure from measured values of the hydraulic pressures of the wheel cylinders.

Then, if it is determined in step S12 that the brake pressure applied to at least one of the wheels through the brake operation by the driver, that is, in Fig. 1, gripping of the brake lever 101, depression of the brake pedal 201, or both of these operations by the driver is lower than the actuation pressure, it is acknowledged that the driver does not wish to activate the departure aid system. Then, the process proceeds to step S16. At this time, the departure aid system is not activated.

On the other hand, if it is determined that the brake pressure applied through the tight gripping of the brake lever 101, the strong depression of the brake pedal 201, or both of these operations by the driver is at least equal to the actuation pressure, it is acknowledged that the driver wishes to automatically retain the rear-wheel brake. Then, the process proceeds to step S14, and the departure aid system is activated. At this time, the departure aid system can be activated regardless of whether a road surface on which the motorcycle is stopped has a gradient, for example, not only on a sloping road but also on a horizontal road.

Note that the "actuation pressure" only has to be the brake pressure at the time when the switch of the departure aid system is turned on, and thus does not always have to be set at least equal to a brake pressure that is required to stop the motorcycle on the sloping road. In addition, the departure aid system can also be set for activation in such a case where the driver performs the strong brake operation on at least one of the brake lever 101 and the brake pedal 201 for a short time and immediately cancels the brake operation as expression of the driver's intention to activate the departure aid system.

After the departure aid system is activated in step S14, it is determined in step S18 whether the brake pressure of the rear wheel that is applied through the brake operation by the driver is at least equal to a specified pressure that is required to stop the motorcycle. Note that the "specified pressure" described herein is specifically a constant value or a variable value that varies in accordance with a road surface gradient or a road surface condition that is estimated during the stop of the motorcycle. Setting of the specified pressure as the constant value is preferred in terms of a point that safe braking control can promptly be executed. In this case, the specified pressure may be set as the brake pressure of the rear wheel in such a degree that the motorcycle can be stopped at any type of the road surface (for example, the horizontal road, an uphill road, a downhill road), more specifically, as the brake pressure of the rear wheel in such a degree that the motorcycle can be stopped under the most strict stop condition, that is, on a steep road with full load capacity (two passengers and a maximum luggage load). For example, in a case of the motorcycle, for which the required brake pressure for the stop on the horizontal road is 5 bar and the required brake pressure for the stop on the steep road is 20 bar, the specified pressure is set at 20 bar regardless of the gradient of the road surface on which the motorcycle is stopped.

In addition, in the case where the specified value is set as the variable value that varies in accordance with the condition, the specified pressure can be set as the variable value that varies in accordance with the condition estimated by at least one type of the motorcycle information other than that from the gradient sensor. For example, the following modes in (I) to (III) below can be raised:
(I) a case where the specified value is set as a variable value that varies in proportion to an input brake pressure by the driver;
(II) a case where the specified value is set as a variable value that varies in accordance with a relationship between the input brake pressure by the driver and deceleration of the wheel; and
(III) a case where the specified value is set as a variable value that varies in accordance with a relationship among the input brake pressure by the driver, a wheel speed, and an estimated motorcycle speed that is computed.

In the case of (I), a determination on the road surface condition depends on the brake operation by the driver. Thus, the driver's intention can accurately be reflected. In addition, in the case of (II), the relationship between the input brake pressure and the deceleration is mapped for each motorcycle body in advance. In this way, the gradient can be estimated from a comparison between the specified pressure and an actually detected value thereof at the stop of the motorcycle (for example, the gradient is estimated as an uphill when the actual deceleration is significant with respect to the brake input, and is estimated as a downhill when the actual deceleration is insignificant). Furthermore, in the case of (III) , a friction coefficient µ of the traveling road surface, in other words, whether the traveling road surface is a low µ road, that is, a bad road can be estimated from the wheel speed. Thus, "the specified pressure" can vary so as to correspond to the estimated road surface condition.

Note that, as a case where the brake pressure of the rear wheel that is applied through the brake operation by the driver becomes lower than the specified pressure, the following can be raised: (i) a case where the brake input by the driver in step S12 is performed only through the operation of the brake lever 101 and the brake pressure of the front wheel is at least equal to the actuation pressure; (ii) a case where only the brake pedal 201 is operated, and the brake pressure of the rear wheel is at least equal to the actuation pressure but is lower than the specified pressure; and (iii) a case where both of the brake lever 101 and the brake pedal 201 are operated, and the brake pressure generated through the operation of at least one of the brake lever 101 and the brake pedal 201 is at least equal to the actuation pressure, but the brake pressure of the rear wheel is lower than the specified pressure.

Here, if above (i) (or above (iii) if the brake pressure generated through the operation of the brake lever 101 in above (iii) is at least equal to the actuation pressure) is applied in step S12, the departure aid system is shifted to a front/rear wheel interlocking control mode.

If it is determined in step S18 that the brake pressure of the rear wheel is at least equal to the specified pressure, the process proceeds to step S20. Then, the departure aid system is actuated, and the brake pressure is automatically retained in a state as is. The brake pressure of the rear wheel may automatically be retained, for example, by closing the rear-wheel side switching valve 207 or by configuring the brake pedal 201 such that a lock mechanism is provided to fix the brake pedal 201 at a depressed position and thus the position of the brake pedal 201 is fixed even when the driver releases his/her foot from the brake pedal 201.

On the other hand, if it is determined in step S18 that the brake pressure of the rear wheel is lower than the specified pressure, the process proceeds to step S22. At this time, the departure aid system is actuated. The brake pressure is boosted once or is repeatedly boosted for plural times until the brake pressure becomes at least equal to the specified pressure. Thereafter, the process proceeds to step S20, and the boosted rear-wheel brake pressure is automatically retained. As a method for automatically retaining the brake pressure of the rear wheel after the brake pressure is boosted to be at least equal to the specified pressure, for example, a method for automatically retaining the brake pressure of the rear wheel to be at least equal to the specified pressure can be raised as described below. The method includes: closing the rear-wheel side switching valve 207, opening the rear-wheel intake valve 209, controlling opening/closing the rear-wheel side inlet valve 213, actuating the rear-wheel side hydraulic pump 219 using the DC motor 300, suctioning a brake fluid from the rear-wheel side master cylinder reservoir 205 via the pipeline 204 and the rear-wheel side intake valve 209, and discharging the brake fluid from the discharge port of the rear-wheel side hydraulic pump 219 through the pipeline 220 by the ECU 400, so as to boost the hydraulic pressure of the pipeline 206; and actuating the rear-wheel side caliper 215 via the rear-wheel side inlet valve 213 using the hydraulic pressure in the pipeline 206 due to such a reason that the rear-wheel side switching valve 207 is closed at this time.

The invention adopts such a configuration. Therefore, even in the case where the expensive gradient detection sensor or a sensor or a part of a device that obtains the engine information is not particularly provided and a simple device configuration is adopted, the invention can reliably actuate the departure assistant system through the expression of the driver ' s intention by the brake operation and can automatically retain the brake pressure of the rear wheel not only on the sloping road but also on the horizontal road even when the driver cancels the brake operation.

Fig. 4 depicts an example of a flowchart from a state where the departure aid system is actuated and the motorcycle is stopped to a time when the actuation of the departure aid system is stopped and the motorcycle is departed.

First, it is determined in step S20 whether at least one type of the motorcycle information that includes an accelerator opening, an engine speed, and output torque information of the motorcycle in an actuated state of the departure aid system, that is, the motorcycle information of only the accelerator opening in Fig. 4 is at least equal to a specified value. If it is determined that the motorcycle information is smaller than the specified value, the process proceeds to step S30. At this time, the process returns to step S24 while the automatic retention of the rear-wheel brake pressure continues (a flow indicated by an arrow P1).

On the other hand, if it is determined that the motorcycle information is at least equal to the specified value, the process proceeds to step S26. At this time, it is determined whether a specified time has elapsed in a state where the motorcycle information is at least equal to the specified value. If it is determined in step S26 that the specified time has not elapsed in the state where the motorcycle information is at least equal to the specified value, the process proceeds to step S30. At this time, the process returns to step S26 while the automatic retention of the rear-wheel brake pressure continues (a flow indicated by an arrow P2).

Only if it is determined in step S24 that the motorcycle information is at least equal to the specified value and it is determined in step S26 that the specified time has elapsed in the state where the motorcycle information is at least equal to the specified value, the process proceeds to step S28. Then, it is configured to stop the actuation of the departure aid system and automatically cancel the brake pressure of the rear wheel. That is, it is not preferred to automatically and immediately cancel the rear-wheel brake pressure when the state where the motorcycle information is at least equal to the specified value is cancelled in a short time (a moment). It is because a case where the driver has no intention of departure can be assumed. For this reason, not only that the motorcycle information is at least equal to the specified value but also that the specified time has elapsed in the state where the motorcycle information is at least equal to the specified value are adopted as a condition that satisfies the expression of the driver's intention of the departure in the invention.

At this time, the specified values of the motorcycle information, such as the accelerator opening, the engine speed, and the output torque information, may each be a variable value that corresponds to at least one of the road surface gradient or the road surface condition that is estimated during the stop of the motorcycle.

The specified values of the motorcycle information, such as the accelerator opening, the engine speed, and the output torque information, may each be set as a large value when it is estimated that the road surface gradient is the uphill during the stop of the motorcycle, or may each be set as a small value when it is estimated that the road surface gradient is the downhill or the bad road. In this way, rapid departure or rollback of the motorcycle body can be prevented. Furthermore, the specified value may vary in accordance with the estimated road surface condition.

In addition, the brake pressure of the rear wheel is preferably cancelled automatically while a pressure reduction amount is adjusted in accordance with a numerical value of the motorcycle information. For example, in the case where the motorcycle information is the accelerator opening, for example, the brake pressure of the rear wheel is preferably cancelled automatically while the pressure reduction amount is adjusted in accordance with a numerical value of the accelerator opening. That is, it is preferred to increase the pressure reduction amount as the numerical value of the accelerator opening is increased. In this way, the brake pressure can promptly be cancelled to allow the departure at rapid acceleration. In addition, it is preferred to reduce the pressure reduction amount as the numerical value of the accelerator opening is reduced. In this way, the brake pressure is gradually cancelled to allow the departure at normal acceleration. Furthermore, the brake pressure of the rear wheel can automatically be cancelled by adjusting the pressure reduction amount in accordance with not only the numerical value of the motorcycle information but also the road surface condition that is estimated during the stop of the motorcycle. In this way, brake retention and a departure aid can safely be realized without hindering feeling of braking by the driver.

In addition, the brake control device for the motorcycle of the invention is configured that the departure aid system is not provided with the gradient detection sensor and has a simple device configuration that only obtains some of the motorcycle information, such as the accelerator opening, for actuation thereof through the brake operation as the expression of the driver's intention. Therefore, cost of the device can be cut.

As it has been described so far, in the case where the motorcycle is stopped on the sloping road, the brake control device for the motorcycle of the invention prevents the rollback of the motorcycle through the automatic retention of the brake pressure that is generated by the brake operation as the expression of the driver' s intention even when the driver thereafter cancels the operation of the brake lever or the brake pedal during the stop. In addition, the brake control device for the motorcycle of the invention allows the smooth departure of the motorcycle by automatically canceling the brake pressure through an accelerator operation as the driver's intention. Furthermore, in the case where the motorcycle is stopped on the horizontal road, the brake control device for the motorcycle of the invention automatically retains the brake pressure generated through the brake operation as the expression of the driver's intention and thereby allows the driver to defog or wipe off dirt on the helmet or pay fee at a tollbooth in a state where both hands are released from the handlebar lever or the foot is released from the brake pedal. As a method for cancelling the brake pressure by stopping the actuation of the departure aid system, for example, the switching valves 107, 207 may be opened, so as to release the hydraulic pressures of the wheel cylinders.

Note that what have been described above merely exemplify the embodiment of the invention and various modifications can be made in claims. For example, the case where the brake control device of the invention is applied to the motorcycle has been described as the embodiment by using Fig. 1 to Fig. 4. However, it is needless to say that the brake control device of the invention can also be applied to various types of motorcycles including four-wheel motorcycles.

### Industrial Applicability

According to the invention, the method and the device for controlling the motorcycle brake can be provided, the method and the device capable of reliably actuating the departure assistant system to assist with departure of the motorcycle, particularly, the motorcycle not only on the sloping road but also on the horizontal road even in the case where the expensive component, such as the gradient detection sensor, is not provided and the inexpensive component configuration is adopted.

## Claims

1. A method for controlling a motorcycle brake to assist with departure of a motorcycle **characterized by** comprising:
(a) detecting a stop (S10) of the motorcycle;
(b) detecting brake pressures (S12) of all wheels and determining whether the brake pressure applied to at least one of all the wheels through a brake operation by a driver is at least equal to an actuation pressure;
(c) activating a departure aid system (S14) regardless of whether a road surface on which the motorcycle is stopped has a gradient when it is determined that the brake pressure is at least equal to the actuation pressure;
(d) determining (S18) whether the brake pressure that is applied to a rear wheel through the brake operation by the driver is at least equal to a specified pressure that is required to stop the motorcycle; and
(e) actuating (S20) the departure aid system to automatically retain the brake pressure in a state as is when the brake pressure of the rear wheel is at least equal to the specified pressure, and
actuating the departure aid system, boosting (S22) the brake pressure to become at least equal to the specified pressure, and thereafter automatically retaining the brake pressure when the brake pressure of the rear wheel is lower than the specified pressure.

2. The method for controlling the motorcycle brake according to claim 1, **characterized in that**
the specified pressure has a constant value or a variable value that varies in accordance with a road surface gradient or a road surface condition that is estimated during the stop of the motorcycle.

3. The method for controlling the motorcycle brake according to claim 1 or 2, **characterized by** further comprising:
(f) determining whether at least one type of motorcycle information that includes an accelerator opening, an engine speed, or output torque information of the motorcycle in an actuated state of the departure aid system is at least equal to a specified value;
(g) determining whether a specified time has elapsed in a state where the motorcycle information is at least equal to the specified value; and
(h) stopping actuation of the departure aid system to automatically cancel the brake pressure of the rear wheel only when the specified time has elapsed in the state where the motorcycle information is at least equal to the specified value.

4. The method for controlling the motorcycle brake according to claim 3, **characterized in that**
the brake pressure of the rear wheel is automatically cancelled in (h) while a pressure reduction amount is adjusted in accordance with a numerical value of the motorcycle information.

5. The method for controlling the motorcycle brake according to claim 3, **characterized in that**
the brake pressure of the rear wheel is automatically cancelled in (h) while a pressure reduction amount is adjusted in accordance with a numerical value of the accelerator opening.

6. The method for controlling the motorcycle brake according to claim 3, 4, or 5, **characterized in that**
the specified value of the motorcycle information is a constant value or a variable value that corresponds to at least one of the road surface gradient or the road surface condition that is estimated during the stop of the motorcycle.

7. The method for controlling the motorcycle brake according to claim 6, **characterized in that**
the specified value of the motorcycle information is set to a large value when the gradient that is estimated during the stop of the motorcycle is an uphill, or is set to a small value when the gradient that is estimated during the stop of the motorcycle is a downhill.

8. The method for controlling the motorcycle brake according to any one of claims 1 to 7, **characterized in that**
the departure aid system is not provided with a gradient detection sensor and is actuated through the brake operation by the driver.

9. A device for controlling a motorcycle brake to assist with departure of a motorcycle **characterized by** comprising:
(a) means for detecting (S10) a stop of the motorcycle;
(b) means for detecting (S12) brake pressures of all wheels and determining whether the brake pressure applied to at least one of all the wheels through a brake operation by a driver is at least equal to an actuation pressure;
(c) means for activating (S14) a departure aid system regardless of whether a road surface on which the motorcycle is stopped has a gradient when it is determined that the brake pressure is at least equal to the actuation pressure;
(d) means for determining (S18) whether the brake pressure that is applied to a rear wheel through the brake operation by the driver is at least equal to a specified pressure that is required to stop the motorcycle; and
(e) means for:
actuating (S20) the departure aid system to automatically retain the brake pressure in a state as is when the brake pressure of the rear wheel is at least equal to the specified pressure; and
actuating the departure aid system, boosting (S22) the brake pressure to become at least equal to the specified pressure, and thereafter automatically retaining the brake pressure when the brake pressure of the rear wheel is lower than the specified pressure.

10. The device for controlling the motorcycle brake according to claim 9, **characterized in that**
the specified pressure has a constant value or a variable value that varies in accordance with a road surface gradient or a road surface condition that is estimated during the stop of the motorcycle.

11. The device for controlling the motorcycle brake according to claim 9 or 10, **characterized by** further comprising:
(f) means for determining whether at least one type of motorcycle information that includes an accelerator opening, an engine speed, or output torque information of the motorcycle in an actuated state of the departure aid system is at least equal to a specified value;
(g) means for determining whether a specified time has elapsed in a state where the motorcycle information is at least equal to the specified value; and
(h) means for stopping actuation of the departure aid system to automatically cancel the brake pressure of the rear wheel only when the specified time has elapsed in the state where the motorcycle information is at least equal to the specified value.

12. The device for controlling the motorcycle brake according to claim 11, **characterized in that**
the brake pressure of the rear wheel is automatically cancelled by the means (h) while a pressure reduction amount is adjusted in accordance with a numerical value of the motorcycle information.

13. The device for controlling the motorcycle brake according to claim 11, **characterized in that**
the brake pressure of the rear wheel is automatically cancelled by the means (h) while a pressure reduction amount is adjusted in accordance with a numerical value of the accelerator opening.

14. The device for controlling the motorcycle brake according to claim 11, 12, or 13, **characterized in that**
the specified value of the motorcycle information is a constant value or a variable value that corresponds to at least one of the road surface gradient or the road surface condition that is estimated during the stop of the motorcycle.

15. The device for controlling the motorcycle brake according to claim 14, **characterized in that**
the specified value of the motorcycle information is set to a large value when the gradient that is estimated during the stop of the motorcycle is an uphill, or is set to a small value when the gradient that is estimated during the stop of the motorcycle is a downhill.

## Patentansprüche

1. Verfahren zum Steuern einer Motorradbremse zur Unterstützung der Abfahrt eines Motorrads, **dadurch gekennzeichnet, dass** das Verfahren Folgendes umfasst:
(a) Erfassen des Stoppens (S10) des Motorrads;
(b) Erfassen von Bremsdrücken (S12) aller Räder und Bestimmen, ob der auf mindestens eins aller Räder durch einen Bremsvorgang durch einen Fahrer aufgebrachte Bremsdruck einem Betätigungsdruck zumindest gleicht;
(c) Aktivieren eines Abfahrtshilfssystems (S14) unabhängig davon, ob eine Straßenoberfläche, auf der das Motorrad gestoppt wird, einen Gradienten aufweist, wenn bestimmt wird, dass der Bremsdruck dem Betätigungsdruck zumindest gleicht;
(d) Bestimmen (S18), ob der durch den Bremsvorgang durch den Fahrer auf ein Hinterrad aufgebrachte Bremsdruck einem festgelegten Druck, der erforderlich ist, um das Motorrad zu stoppen, zumindest gleicht; und
(e) Betätigen (S20) des Abfahrtshilfssystems, um den Bremsdruck automatisch in einem Zustand zu halten, der vorherrscht, wenn der Bremsdruck des Hinterrads dem festgelegten Druck zumindest gleicht, und Betätigen des Abfahrtshilfssystems, Erhöhen (S22) des Bremsdrucks, sodass er zumindest dem festgelegten Druck gleicht, und anschließend automatisches Halten des Bremsdrucks, wenn der Bremsdruck des Hinterrads niedriger als der festgelegte Druck ist.

2. Verfahren zum Steuern der Motorradbremse nach Anspruch 1, **dadurch gekennzeichnet, dass** der festgelegte Druck einen konstanten Wert oder einen variablen Wert aufweist, der entsprechend eines Straßenoberflächengradienten oder eines Straßenoberflächenzustands, der während des Stoppens des Motorrads geschätzt wird, variiert.

3. Verfahren zum Steuern der Motorradbremse nach Anspruch 1 oder 2, **dadurch gekennzeichnet, dass** das Verfahren ferner Folgendes umfasst:
(f) Bestimmen, ob mindestens ein Motorradinformationstyp, der eine Gashebelöffnungs-, eine Motorgeschwindigkeits- oder eine Ausgangsdrehmomentinformation des Motorrads im betätigten Zustand des Abfahrtshilfssystems umfasst, einem festgelegten Wert zumindest gleicht;
(g) Bestimmen, ob eine festgelegte Zeit in einem Zustand, in dem die Motorradinformation dem festgelegten Wert zumindest gleicht, abgelaufen ist; und
(h) Stoppen der Betätigung des Abfahrtshilfssystems, um in dem Zustand, in dem die Motorradinformation dem festgelegten Wert zumindest gleicht, den Bremsdruck des Hinterrads erst abzubrechen, wenn die festgelegte Zeit abgelaufen ist.

4. Verfahren zum Steuern der Motorradbremse nach Anspruch 3, **dadurch gekennzeichnet, dass** der Bremsdruck des Hinterrads in (h) automatisch abgebrochen wird, während eine Druckminderungsmenge entsprechend eines numerischen Werts der Motorradinformation angepasst wird.

5. Verfahren zum Steuern der Motorradbremse nach Anspruch 3, **dadurch gekennzeichnet, dass** der Bremsdruck des Hinterrads in (h) automatisch abgebrochen wird, während eine Druckminderungsmenge entsprechend eines numerischen Werts der Gashebelöffnung angepasst wird.

6. Verfahren zum Steuern der Motorradbremse nach Anspruch 3, 4 oder 5, **dadurch gekennzeichnet, dass** der festgelegte Wert der Motorradinformation ein konstanter Wert oder ein variabler Wert ist, der dem Straßenoberflächengradienten und/oder dem Straßenoberflächenzustand entspricht, der während des Stoppens des Motorrads geschätzt wird.

7. Verfahren zum Steuern der Motorradbremse nach Anspruch 6, **dadurch gekennzeichnet, dass** der festgelegte Wert der Motorradinformation auf einen großen Wert eingestellt wird, wenn der Gradient, der während des Stoppens des Motorrads geschätzt wird, bergauf verläuft, oder auf einen kleinen Wert eingestellt wird, wenn der Gradient, der während des Stoppens des Motorrads geschätzt wird, bergab verläuft.

8. Verfahren zum Steuern der Motorradbremse nach einem der Ansprüche 1 bis 7, **dadurch gekennzeichnet, dass**
das Abfahrtshilfssystem nicht mit einem Gradientenerfassungssensor versehen ist und durch den Bremsvorgang durch den Fahrer betätigt wird.

9. Vorrichtung zum Steuern einer Motorradbremse zur Unterstützung der Abfahrt eines Motorrads, **dadurch gekennzeichnet, dass** die Vorrichtung Folgendes umfasst:
(a) eine Einrichtung zum Erfassen (S10) des Stoppens des Motorrads;
(b) eine Einrichtung zum Erfassen (S12) von Bremsdrücken aller Räder und Bestimmen, ob der auf mindestens eins aller Räder durch einen Bremsvorgang durch einen Fahrer aufgebrachte Bremsdruck einem Betätigungsdruck zumindest gleicht;
(c) eine Einrichtung zum Aktivieren (S14) eines Abfahrtshilfssystems unabhängig davon, ob eine Straßenoberfläche, auf der das Motorrad gestoppt wird, einen Gradienten aufweist, wenn bestimmt wird, dass der Bremsdruck dem Betätigungsdruck zumindest gleicht;
(d) Mittel zum Bestimmen (S18), ob der durch den Bremsvorgang durch den Fahrer auf ein Hinterrad aufgebrachte Bremsdruck einem festgelegten Druck, der erforderlich ist, um das Motorrad zu stoppen, zumindest gleicht; und
(e) eine Einrichtung zum:
Betätigen (S20) des Abfahrtshilfssystems, um den Bremsdruck automatisch in einem Zustand zu halten, der vorherrscht, wenn der Bremsdruck des Hinterrads dem festgelegten Druck zumindest gleicht; und
Betätigen des Abfahrtshilfssystems, Erhöhen (S22) des Bremsdrucks, sodass er zumindest dem festgelegten Druck gleicht, und anschließend automatisches Halten des Bremsdrucks, wenn der Bremsdruck des Hinterrads niedriger als der festgelegte Druck ist.

10. Vorrichtung zum Steuern der Motorradbremse nach Anspruch 9, **dadurch gekennzeichnet, dass** der festgelegte Druck einen konstanten Wert oder einen variablen Wert aufweist, der entsprechend eines Straßenoberflächengradienten oder eines Straßenoberflächenzustands, der während des Stoppens des Motorrads geschätzt wird, variiert.

11. Vorrichtung zum Steuern der Motorradbremse nach Anspruch 9 oder 10, **dadurch gekennzeichnet, dass** das Verfahren ferner Folgendes umfasst:
(f) eine Einrichtung zum Bestimmen, ob mindestens ein Motorradinformationstyp, der eine Gashebelöffnung, eine Motorgeschwindigkeit oder ein Ausgangsdrehmoment des Motorrads im betätigten Zustand des Abfahrtshilfssystems umfasst, einem festgelegten Wert zumindest gleicht;
(g) eine Einrichtung zum Bestimmen, ob eine festgelegte Zeit in einem Zustand, in dem die Motorradinformation dem festgelegten Wert zumindest gleicht, abgelaufen ist; und
(h) eine Einrichtung zum Stoppen der Betätigung des Abfahrtshilfssystems, um in dem Zustand, in dem die Motorradinformation dem festgelegten Wert zumindest gleicht, den Bremsdruck des Hinterrads erst abzubrechen, wenn die festgelegte Zeit abgelaufen ist.

12. Vorrichtung zum Steuern der Motorradbremse nach Anspruch 11, **dadurch gekennzeichnet, dass** der Bremsdruck des Hinterrads durch die Einrichtung (h) automatisch abgebrochen wird, während eine Druckminderungsmenge entsprechend eines numerischen Werts der Motorradinformation angepasst wird.

13. Vorrichtung zum Steuern der Motorradbremse nach Anspruch 11, **dadurch gekennzeichnet, dass** der Bremsdruck des Hinterrads durch die Einrichtung (h) automatisch abgebrochen wird, während eine Druckminderungsmenge entsprechend eines numerischen Werts der Gashebelöffnung angepasst wird.

14. Vorrichtung zum Steuern der Motorradbremse nach Anspruch 11, 12 oder 13, **dadurch gekennzeichnet, dass** der festgelegte Wert der Motorradinformation ein konstanter Wert oder ein variabler Wert ist, der dem Straßenoberflächengradienten und/oder dem Straßenoberflächenzustand entspricht, der während des Stoppens des Motorrads geschätzt wird.

15. Vorrichtung zum Steuern der Motorradbremse nach Anspruch 14, **dadurch gekennzeichnet, dass** der festgelegte Wert der Motorradinformation auf einen großen Wert eingestellt wird, wenn der Gradient, der während des Stoppens des Motorrads geschätzt wird, bergauf verläuft, oder auf einen kleinen Wert eingestellt wird, wenn der Gradient, der während des Stoppens des Motorrads geschätzt wird, bergab verläuft.

## Revendications

1. Procédé de commande d'un frein de motocyclette pour aider au départ d'une motocyclette, **caractérisé en ce qu'**il comprend :
(a) la détection d'un arrêt (S10) de la motocyclette ;
(b) la détection de pressions de frein (S12) de la totalité des roues et la détermination si la pression de frein appliquée à au moins une de la totalité des roues par le biais d'une manœuvre de frein par un conducteur est au moins égale à une pression d'actionnement ;
(c) l'activation d'un système d'assistance au départ (S14), qu'une surface de route sur laquelle la motocyclette est arrêtée présente ou non une déclivité, lorsqu'il est déterminé que la pression de frein est au moins égale à la pression d'actionnement ;
(d) la détermination (S18) si la pression de frein qui est appliquée à une roue arrière par le biais de la manœuvre de frein par le conducteur est au moins égale à une pression spécifiée qui est exigée pour arrêter la motocyclette ; et
(e) l'actionnement (S20) du système d'assistance au départ dans le but de maintenir automatiquement la pression de frein en l'état lorsque la pression de frein de la roue arrière est au moins égale à la pression spécifiée, et
l'actionnement du système d'assistance au départ, l'augmentation (S22) de la pression de frein dans le but de la rendre au moins égale à la pression spécifiée, puis le maintien automatique de la pression de frein lorsque la pression de frein de la roue arrière est inférieure à la pression spécifiée.

2. Procédé de commande du frein de motocyclette selon la revendication 1, **caractérisé en ce que**
la pression spécifiée a une valeur constante ou une valeur variable qui varie en fonction d'une déclivité de surface de route ou d'un état de surface de route qui est estimée ou estimé au cours de l'arrêt de la motocyclette.

3. Procédé de commande du frein de motocyclette selon la revendication 1 ou 2, **caractérisé en ce qu'**il comprend en outre :
(f) la détermination si au moins un type d'information de motocyclette comportant une ouverture d'accélérateur, un régime moteur ou une information de couple de sortie de la motocyclette dans un état actionné du système d'assistance au départ est au moins égal à une valeur spécifiée ;
(g) la détermination si un laps de temps spécifié s'est écoulé dans le cas où l'information de motocyclette est au moins égale à la valeur spécifiée ; et
(h) l'arrêt de l'actionnement du système d'assistance au départ dans le but d'annuler automatiquement la pression de frein de la roue arrière uniquement lorsque le laps de temps spécifié s'est écoulé dans le cas où l'information de motocyclette est au moins égale à la valeur spécifiée.

4. Procédé de commande du frein de motocyclette selon la revendication 3, **caractérisé en ce que**
la pression de frein de la roue arrière est automatiquement annulée à (h) tandis qu'une quantité de réduction de pression est ajustée en fonction d'une valeur numérique de l'information de motocyclette.

5. Procédé de commande du frein de motocyclette selon la revendication 3, **caractérisé en ce que**
la pression de frein de la roue arrière est automatiquement annulée à (h) tandis qu'une quantité de réduction de pression est ajustée en fonction d'une valeur numérique de l'ouverture d'accélérateur.

6. Procédé de commande du frein de motocyclette selon la revendication 3, 4 ou 5, **caractérisé en ce que**
la valeur spécifiée de l'information de motocyclette est une valeur constante ou une valeur variable qui correspond à la déclivité de surface de route et/ou à l'état de surface de route qui sont estimés au cours de l'arrêt de la motocyclette.

7. Procédé de commande du frein de motocyclette selon la revendication 6, **caractérisé en ce que**
la valeur spécifiée de l'information de motocyclette est fixée à une valeur élevée lorsque la déclivité qui est estimée au cours de l'arrêt de la motocyclette est une rampe, ou est fixée à une valeur faible lorsque la déclivité qui est estimée au cours de l'arrêt de la motocyclette est une pente.

8. Procédé de commande du frein de motocyclette selon l'une quelconque des revendications 1 à 7, **caractérisé en ce que**
le dispositif d'assistance au départ n'est pas doté d'un capteur de détection de déclivité et est actionné par le biais de la manœuvre de frein par le conducteur.

9. Dispositif de commande d'un frein de motocyclette pour aider au départ d'une motocyclette, **caractérisé en ce qu'**il comprend :
(a) des moyens de détection (S10) d'un arrêt de la motocyclette ;
(b) des moyens de détection (S12) de pressions de frein de la totalité des roues et de détermination si la pression de frein appliquée à au moins une de la totalité des roues par le biais d'une manœuvre de frein par un conducteur est au moins égale à une pression d'actionnement ;
(c) des moyens d'activation (S14) d'un système d'assistance au départ, qu'une surface de route sur laquelle la motocyclette est arrêtée présente ou non une déclivité, lorsqu'il est déterminé que la pression de frein est au moins égale à la pression d'actionnement ;
(d) des moyens de détermination (S18) si la pression de frein qui est appliquée à une roue arrière par le biais de la manœuvre de frein par le conducteur est au moins égale à une pression spécifiée qui est exigée pour arrêter la motocyclette ; et
(e) des moyens :
d'actionnement (S20) du système d'assistance au départ dans le but de maintenir automatiquement la pression de frein en l'état lorsque la pression de frein de la roue arrière est au moins égale à la pression spécifiée ; et
d'actionnement du système d'assistance au départ, d'augmentation (S22) de la pression de frein dans le but de la rendre au moins égale à la pression spécifiée, puis de maintien automatique de la pression de frein lorsque la pression de frein de la roue arrière est inférieure à la pression spécifiée.

10. Dispositif de commande du frein de motocyclette selon la revendication 9, **caractérisé en ce que**
la pression spécifiée a une valeur constante ou une valeur variable qui varie en fonction d'une déclivité de surface de route ou d'un état de surface de route qui est estimée ou estimé au cours de l'arrêt de la motocyclette.

11. Dispositif de commande du frein de motocyclette selon la revendication 9 ou 10, **caractérisé en ce qu'**il comprend en outre :
(f) des moyens de détermination si au moins un type d'information de motocyclette comportant une ouverture d'accélérateur, un régime moteur ou une information de couple de sortie de la motocyclette dans un état actionné du système d'assistance au départ est au moins égal à une valeur spécifiée ;
(g) des moyens de détermination si un laps de temps spécifié s'est écoulé dans le cas où l'information de motocyclette est au moins égale à la valeur spécifiée ; et
(h) des moyens d'arrêt de l'actionnement du système d'assistance au départ dans le but d'annuler automatiquement la pression de frein de la roue arrière uniquement lorsque le laps de temps spécifié s'est écoulé dans le cas où l'information de motocyclette est au moins égale à la valeur spécifiée.

12. Dispositif de commande du frein de motocyclette selon la revendication 11, **caractérisé en ce que**
la pression de frein de la roue arrière est automatiquement annulée par les moyens (h) tandis qu'une quantité de réduction de pression est ajustée en fonction d'une valeur numérique de l'information de motocyclette.

13. Dispositif de commande du frein de motocyclette selon la revendication 11, **caractérisé en ce que**
la pression de frein de la roue arrière est automatiquement annulée par les moyens (h) tandis qu'une quantité de réduction de pression est ajustée en fonction d'une valeur numérique de l'ouverture d'accélérateur.

14. Dispositif de commande du frein de motocyclette selon la revendication 11, 12 ou 13, **caractérisé en ce que**
la valeur spécifiée de l'information de motocyclette est une valeur constante ou une valeur variable qui correspond à la déclivité de surface de route et/ou à l'état de surface de route qui sont estimés au cours de l'arrêt de la motocyclette.

15. Dispositif de commande du frein de motocyclette selon la revendication 14, **caractérisé en ce que**
la valeur spécifiée de l'information de motocyclette est fixée à une valeur élevée lorsque la déclivité qui est estimée au cours de l'arrêt de la motocyclette est une rampe, ou est fixée à une valeur faible lorsque la déclivité qui est estimée au cours de l'arrêt de la motocyclette est une pente.
